# NEUE EUROPÄISCHE PATENTSCHRIFT

(11) **EP 2 606 310 B2**
(45) Veröffentlichungstag und Bekanntmachung des Hinweises auf die Entscheidung über den Einspruch: **14.10.2020**
(45) Hinweis auf die Patenterteilung: 20.12.2017
(21) Anmeldenummer: 11754322.3
(22) Anmeldetag: 15.08.2011
(51) Int. Cl.: G01B 7/02, G01B 7/14, G01B 21/16

(54) **KAPAZITIVE UND/ODER INDUKTIVE ABSTANDSMESSUNG**
CAPACITIVE AND/OR INDUCTIVE DISTANCE MEASUREMENT
MESURE DE DISTANCE CAPACITIVE ET/OU INDUCTIVE

(30) Priorität: 19.08.2010 DE 102010039528
(43) Veröffentlichungstag der Anmeldung: 26.06.2013
(73) Patentinhaber: Trumpf Werkzeugmaschinen GmbH + Co. KG, 71254 Ditzingen (DE)
(72) Erfinder: RITTER, Ulrich, 86482 Aystetten (DE); HORN, Armin, 71272 Renningen (DE); SCHOLICH-TESSMANN, Wolfgang, 71032 Böblingen (DE); MEINDL, Ulrich, 71111 Waldenbuch (DE); HAGENLOCHER, Tobias, 71254 Ditzingen (DE)
(74) Vertreter: Kohler Schmid Möbus Patentanwälte
(86) Internationale Anmeldenummer: PCT/EP2011/064036
(87) Internationale Veröffentlichungsnummer: WO 2012/022718

(56) Entgegenhaltungen:
- EP-A1- 1 684 046
- DD-A1- 264 748
- DE-A1- 10 152 130
- DE-B3-102008 030 783

## Beschreibung

Die vorliegende Erfindung betrifft eine Laserbearbeitungsmaschine, umfassend: eine Bearbeitungsdüse sowie eine Abstandsmesseinrichtung zur kapazitiven und/oder induktiven Messung eines Abstands zwischen der Bearbeitungsdüse und einem Werkstück, die Abstandsmesseinrichtung umfassend: einen Wandler zur Umsetzung eines periodischen Schwingungssignals mit abstandsabhängiger Frequenz in ein Impulssignal, sowie einen Zähler zur Zählung von Impulsen des Impulssignals innerhalb eines Messintervalls zur Bestimmung der abstandsabhängigen Frequenz des periodischen Schwingungssignals.

Aus der DE 10 2008 030 783 der Anmelderin ist eine Laserbearbeitungsmaschine mit einem kapazitiven Abstandsmesssystem bekannt geworden, bei dem eine Bearbeitungsdüse und ein zu bearbeitendes Werkstück einen variablen Kondensator bilden, der in einen LC-Schwingkreis eingebunden ist. Eine kapazitive Abstandsmesseinrichtung und ein zugehöriges Verfahren sind auch aus der EP 1 684 046 A1 oder der EP 0 873 813 B1 der Anmelderin bekannt.

Alternativ oder zusätzlich zu einer kapazitiven Abstandsmessung ist auch eine induktive Abstandsmessung zwischen zwei Bauteilen möglich. Ein Beispiel hierfür ist die DE 201 21 885 U1, bei der sowohl eine Induktionsspule zur induktiven Bestimmung des Abstands zwischen einem Arbeitskopf und einem Werkstück als auch eine Kondensatorelektrode zur kapazitiven Bestimmung des Abstands quer zu einem Austrittskanal des Arbeitskopfes vorgesehen sind.

Zur Abstandmessung wird die Frequenz des Schwingkreises durch das Zählen der Schwingungsperioden des (harmonischen) Schwingungssignals pro Zeitintervall bzw. pro Messintervall ermittelt. Bei diesem Verfahren begrenzt die Abtastrate, d.h. die Rate, mit der aufeinander folgende Abstandsmessungen durchgeführt werden, die Messgenauigkeit: Je höher die Abtastrate, desto geringer die Zeitdauer des Messintervalls und desto geringer die Genauigkeit der Frequenz- und damit der Abstandsmessung. Beispielsweise liegt der Fehler bei der Frequenzmessung bei einer Zeitdauer des Messintervalls von t = 1 ms bei +/- 1000 Hz.

Weitere Abstandsmesseinrichtungen sind aus DE 101 52 130 A1 und DD 264 748 A1 bekannt.

### Aufgabe der Erfindung

Es ist die Aufgabe der vorliegenden Erfindung, eine Laserbearbeitungsmaschine mit einer Abstandsmesseinrichtung derart weiterzubilden, dass die Genauigkeit bei der Abstandsmessung erhöht wird.

### Gegenstand der Erfindung

Die Aufgabe der Erfindung wird mit der Merkmalskombination des Anspruchs 1 gelöst. Vorteilhafte Weiterbildungen der Erfindung sind Gegenstand der abhängigen Ansprüche.

Diese Aufgabe wird erfindungsgemäß gelöst durch eine Laserbearbeitungsmaschine der eingangs genannten Art, bei der die Abstandsmesseinrichtung für die präzise Bestimmung der abstandsabhängigen Frequenz Mittel zur Anpassung der Phasenlage oder Mittel zur Berücksichtigung der Phasenlage zwischen dem Messintervall und den Impulsen des Impulssignals aufweist.

Es wurde erkannt, dass es günstig ist, zur Erhöhung der Messgenauigkeit den Einfluss des (diskreten) Messintervalls bzw. des Messzeitfensters auf die ermittelte Frequenz zu berücksichtigen. Bei der herkömmlichen Bestimmung der abstandsabhängigen Frequenz wird lediglich die Zahl der gemessenen Impulse durch die Zeitlänge des Messintervalls dividiert. Hierbei kann jedoch sowohl die Länge des Messintervalls als auch die Phasenlage des Messintervalls ggf. ungünstig gewählt sein, so dass eine zu große oder zu geringe Zahl an Impulsen gezählt wird, was insbesondere bei einer verhältnismäßig kleinen Zahl von Impulsen innerhalb des Messintervalls zu großen Fehlern bei der Frequenzmessung führt.

Unter einem Impulssignal wird ein Signal verstanden, das mindestens eine, typischer Weise genau eine steil ansteigende bzw. abfallende Flanke während einer Schwingungsperiode des Schwingungssignals aufweist, die einem definierten Zeitpunkt zugeordnet und mit dem (Impuls-)zähler detektiert werden kann. Insbesondere kann es sich bei dem Impulssignal um ein Rechtecksignal oder ein Sägezahnsignal, ggf. auch um ein Dreiecksignal handeln.

Durch die erfindungsgemäßen Mittel kann die Präzision bei der Frequenzmessung erhöht werden. Somit können z.B. bei einer kapazitiven Abstandsmessung geringere Kapazitätsunterschiede festgestellt werden. Dies ermöglicht eine Erhöhung des Maximalabstandes bei der Abstandsmessung (Kapazität ∼ 1 / Abstand) und damit des Messbereichs. Außerdem können größere Parallelkapazitäten in die Nähe der Bearbeitungsdüse gebracht und deren Einfluss kompensiert werden. Auch kann bei gleich bleibender Genauigkeit z.B. die Taktrate der Abstandsmessung erhöht werden.

Bei einer Ausführungsform umfassen die Mittel zur Anpassung der Phasenlage eine Synchronisationseinrichtung, insbesondere eine Triggerlogik, zur Synchronisation des Messintervalls mit den Impulsen des Impulssignals. Durch die Synchronisation kann sichergestellt werden, dass der Startzeitpunkt und der Endzeitpunkt des Messintervalls mit einem jeweiligen Impuls des Impulssignals übereinstimmt, d.h. durch die Synchronisation wird die Zeitdauer sowie die Phasenlage des Messintervalls an die jeweils zu bestimmende Frequenz angepasst.

In einer vorteilhaften Weiterbildung weist die Abstandsmesseinrichtung eine Zeitmesseinrichtung zur Messung der Zeitdauer des Messintervalls auf. Parallel zur Zählung der Impulse wird mit Hilfe der Zeitmesseinrichtung die Zeitdauer des Messintervalls präzise bestimmt. Dies ist notwendig, da dessen Zeitdauer von der zu bestimmenden Frequenz abhängt.

Für die vorliegenden Anwendungen hat sich eine Zeitmesseinrichtung (präzise Uhr) mit einer Genauigkeit von mehr als 100 ps, bevorzugt von mehr als 50 ps als besonders vorteilhaft erwiesen. Bei der auf diese Weise angepassten Frequenzbestimmung kann die Anzahl der gezählten Impulse wie bei der herkömmlichen Frequenzbestimmung durch die (angepasste) Länge des Messintervalls geteilt werden, um die Frequenz präzise zu bestimmen.

In einer Ausführungsform umfassen die Mittel zur Berücksichtigung der Phasenlage einen Phasendetektor zur Ermittlung der Phasenlage zwischen dem Messintervall und dem Impulssignal. Da der Phasendetektor die Phasenlage des Messintervalls bezüglich der Impulse, z.B. in Form von Rechteck-, Dreieck- oder Sägezahnpulsen feststellt, kann ein Messintervall mit einer konstanten Zeitdauer verwendet werden, d.h. es ist nicht notwendig, die Zeitdauer des Messintervalls bzw. die Phasenlage des Messintervalls an die Impulse des Impulssignals anzupassen.

In einer Weiterbildung weisen die Mittel zur Berücksichtigung der Phasenlage eine Bestimmungseinrichtung, insbesondere eine Rechenlogik, zur Bestimmung des Zeitversatzes zwischen dem Messintervall und den Impulsen des Impulssignals auf. In diesem Fall kann der Anteil der Teilperioden des Impulssignals am Anfang und am Ende des Messintervalls anhand der Phaseninformation ermittelt werden. Die Frequenz kann in diesem Fall bestimmt werden, indem zur Zahl der gemessenen Impulse der Startperiodenteil und den Stopp-Periodenteil hinzuaddiert wird und diese Summe durch die Messdauer bzw. die Zeitdauer des Messintervalls geteilt wird.

Bei einer weiteren Ausführungsform ist der Wandler als Schmitt-Trigger ausgebildet. Der Schmitt-Trigger ist eine elektronische Komparatorschaltung (Schwellwertschalter) und wandelt auf einfache Weise das periodische Schwingungssignal typischer Weise in ein Rechtecksignal um, um die Zählung der Schwingungsperioden des periodischen Schwingungssignals zu vereinfachen.

Bei der erfindungsgemäßen Laserbearbeitungsmaschine umfasst die Abstandsmesseinrichtung einen Schwingkreis mit abstandsabhängiger Kapazität und/oder Induktivität zur Erzeugung des periodischen Schwingungssignals. Die Bauteile, deren Abstand zueinander bestimmt werden soll, können einen Kondensator bilden, dessen Kapazität abstandsabhängig variiert. Alternativ oder zusätzlich kann mindestens eines der Bauteile mit einer Spule versehen werden, um eine induktive Abstandsmessung zu ermöglichen. In beiden Fällen wird hierbei ein (LC-)Schwingkreis gebildet, dessen Frequenz abstandsabhängig variiert und welche auf die oben beschriebene Weise bestimmt wird. Es versteht sich, dass die Abstandsmesseinrichtung, die typischer Weise als Schaltungsanordnung ausgebildet ist, zur Kontaktierung der Bauteile, zwischen denen der Abstand gemessen werden soll, geeignete Anschlüsse aufweisen kann.

Die Abstandsmesseinrichtung umfasst bevorzugt einen ansteuerbaren Schalter zum Aktivieren des Zählers während des Messintervalls sowie einen Messtaktgeber zum Ansteuern des Schalters. Der Messtaktgeber kann z.B. als Rechteck-, Dreieck- oder Sägezahngenerator ausgebildet sein und dient der Ansteuerung eines Schalters (z.B. in Form eines Transistors), um das Impulssignal während des Messintervalls dem (digitalen) Zähler zuzuführen bzw. das Zuführen Impulssignals zum Zähler zwischen zwei aufeinander folgenden Messintervallen zu verhindern, um den Zähler auslesen und zurücksetzen zu können.

Wie weiter oben beschrieben wurde, betrifft die Erfindung eine Laserbearbeitungsmaschine, umfassend: eine Bearbeitungsdüse sowie eine Abstandsmesseinrichtung, die wie oben beschrieben ausgebildet ist, um den Abstand zwischen der Bearbeitungsdüse und einem Werkstück zu messen. Die Bearbeitungsdüse und das Werkstück können elektrisch kontaktiert werden und zwei Teile eines variablen Kondensators zu bilden, der in einen LC-Schwingkreis eingebunden ist. Es versteht sich, dass mit der Abstandsmesseinrichtung sowohl ein Arbeitsabstand zwischen der Spitze der Bearbeitungsdüse und dem Werkstück als auch ggf. ein seitlicher Abstand zu Vorsprüngen an dem Werkstück bestimmt werden kann.

Um einen eindeutigen Zusammenhang zwischen der Kapazität und dem Abstand zwischen Bearbeitungsdüse bzw. Spitze der Bearbeitungsdüse und Werkstück herzustellen, ist es erforderlich, die Abstandsmesseinrichtung zu kalibrieren. Die Kalibrierung erfolgt über eine Kennlinienaufnahme, die in der Regel an einem ebenen metallischen Werkstück (Blech) vorgenommen wird. Ist die Geometrie des Werkstücks nicht über die gesamte Bearbeitungsdauer konstant, z.B. wenn an diesem Umformungen vorgenommen werden, verändert sich das Abstandssignal aufgrund der lateralen Empfindlichkeit nicht nur wie gewünscht mit dem definierten Abstand, sondern auch mit der Werkstückgeometrie, d.h. nahe an der Schneidlinie befindliche Werkstückstrukturen, bspw. Innenkanten oder vergleichbare Werkstückgeometrien haben einen Einfluss auf die Kapazität, was zu einer falschen bzw. ungenauen Bestimmung des Abstands führen kann.

Auch ist es ggf. problematisch, dass das von der Spitze der Bearbeitungsdüse ausgehende elektrische Feld bzw. dessen Feldlinien sich in mehrere Richtungen erstrecken und dass bei der Abstandsmessung automatisch eine Mittelung über die in diesen Richtungen gemessenen Abstände erfolgt. Eine Änderung der Kapazität kann daher nicht eindeutig auf die Änderung des Abstandes in einer definierten Messrichtung zurückgeführt werden.

Bei der erfindungsgemäßen Laserbearbeitungsmaschine ist die Bearbeitungsdüse zumindest in einem Teilbereich entlang ihrer Mantelfläche, der sich bis zur Stirnseite der Bearbeitungsdüse erstreckt, von einer elektrisch leitenden Abschirmung umgeben, um den (lateralen) Messdurchmesser (d.h. senkrecht zur Messrichtung) zu begrenzen und dadurch den Einfluss der Werkstückgeometrie auf die Abstandsmessung zu reduzieren. Durch das Vorsehen einer Abschirmung kann die laterale Ausdehnung des "Messdurchmessers", d.h. des Bereichs, in dem die Feldlinien auf das Werkstück treffen, deutlich verringert werden. Die Abschirmung kann hierbei derart erfolgen, dass sich im Wesentlichen nur zwischen der Stirnseite der Bearbeitungsdüse und dem Werkstück ein elektrisches Feld ausbildet, nicht aber zwischen der Mantelfläche der typischer Weise rotationssymmetrischen Bearbeitungsdüse und dem Werkstück.

In einer Weiterbildung ist die Abschirmung durch ein metallisches Schirmelement, z.B. ein Schirmblech, gebildet. Das metallische Schirmblech ist von der Bearbeitungsdüse beabstandet und dient dazu, die elektrischen Feldlinien möglichst in alle Richtungen bis auf die Messrichtung, d.h. bis auf die Richtung, in welcher der Abstand bestimmt werden soll, definiert (konstant) auszulegen.

Hierbei wird jedoch auch der Messbereich in Messrichtung reduziert, da die Kapazität der Anordnung aus Messspitze und Werkstück bzw. der Anteil der Kapazität, der vom Abstand zum Werkstück beeinflusst wird, abnimmt. Gegebenenfalls reicht daher die Präzision eines derart modifizierten Laserbearbeitungskopfes für die Abstandsmessung nicht mehr aus, sofern nicht zusätzlich zu den oben beschriebenen Maßnahmen zur Abschirmung des elektrischen Feldes die weiter oben im Zusammenhang mit der Abstandsmesseinrichtung beschriebenen Maßnahmen zur Erhöhung der Messgenauigkeit verwendet werden. Durch die Kombination dieser Maßnahmen kann eine im Wesentlichen von der Werkstückgeometrie unabhängige Abstandsmessung mit hoher Messgenauigkeit erfolgen.

Es versteht sich, dass sich auch die konstruktive Auslegung der Bearbeitungsdüse, insbesondere der Größe und der Geometrie der Bearbeitungsdüse auf den Messdurchmesser sowie auf den Messbereich auswirken. In einer Ausführungsform ist die Bearbeitungsdüse plattenförmig, d.h. sie weist eine seitliche Erstreckung (senkrecht zur Düsenachse) auf, die erheblich größer ist als die Erstreckung der Bearbeitungsdüse in Richtung der Düsenachse. Unter einer plattenförmigen Bearbeitungsdüse wird im Sinne dieser Anmeldung eine Bearbeitungsdüse verstanden, deren Stirnseite eine Erstreckung senkrecht zur Düsenachse (entsprechend dem Durchmesser an der Stirnseite) aufweist, die mindestens doppelt so groß, bevorzugt mindestens vier Mal so groß, insbesondere mindestens 10 Mal so groß ist wie die Erstreckung der Bearbeitungsdüse in Richtung der Düsenachse. Durch die Verwendung einer plattenförmigen Bearbeitungsdüse wird die Oberfläche entlang des Düsenmantels auf ein Minimum reduziert, so dass der Messdurchmesser bzw. der Beitrag der Feldlinien, welche von der Mantelfläche ausgehen, minimiert werden kann.

Es versteht sich, das sowohl der Laserbearbeitungskopf mit der elektrischen Abschirmung als auch die plattenförmige Bearbeitungsdüse ggf. auch ohne die oben beschriebene Abstandsmesseinrichtung verwendet werden können und somit Gegenstände darstellen, die auch unabhängig von der Abstandsmesseinrichtung schützenswert sind.

Durch eine gezielte Auslegung der Bearbeitungsdüse kann ein signifikant niedrigerer Messdurchmesser erzielt werden, mit dem im Regelfall jedoch eine signifikante Verringerung des Messbereichs (in Laserstrahlrichtung) einhergeht, welche durch die präzisere Frequenzauflösung bzw. die höhere Messgenauigkeit der oben beschriebenen Abstandsmesseinrichtung kompensiert werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Abstandsmesseinrichtung gemäß dem Stand der Technik, bei der zur Bestimmung einer abstandsabhängigen Frequenz ein periodisches Schwingungssignal in ein Rechtecksignal umgewandelt wird,
- Fig. 2: eine schematische Darstellung eines Beispiels einer Abstandsmesseinrichtung, bei der eine Anpassung der Phasenlage eines Messintervalls an das Rechtecksignal erfolgt,
- Fig. 3: eine schematische Darstellung eines weiteren Beispiels einer Abstandsmesseinrichtung, bei der die Phasenlage des Messintervalls bezüglich des Rechtecksignals berücksichtigt wird,
- Fig. 4: eine schematische Darstellung eines Details einer Laserbearbeitungsmaschine mit einer Laserbearbeitungsdüse und einem Werkstück, welche einen variablen Kondensator bilden,
- Fig. 5a: eine schematische Darstellung des Rechtecksignals und eines Messintervalls bei einer Abstandsmesseinrichtung gemäß Fig. 1,
- Fig. 5b: eine schematische Darstellung eines Rechtecksignals und eines Messintervalls bei einer Abstandsmesseinrichtung gemäß Fig. 2,
- Fig. 5c: eine schematische Darstellung eines Rechtecksignals und eines Messintervalls bei einer Abstandsmesseinrichtung gemäß Fig. 3,
- Fig. 6: eine schematische Darstellung analog Fig. 4 mit einer Laserbearbeitungsdüse, die von einer metallischen Abschirmung umgeben ist, sowie
- Fig. 7: eine schematische Darstellung einer Laserbearbeitungsdüse, welche zur Verringerung des Messdurchmessers eine Isolation aufweist.

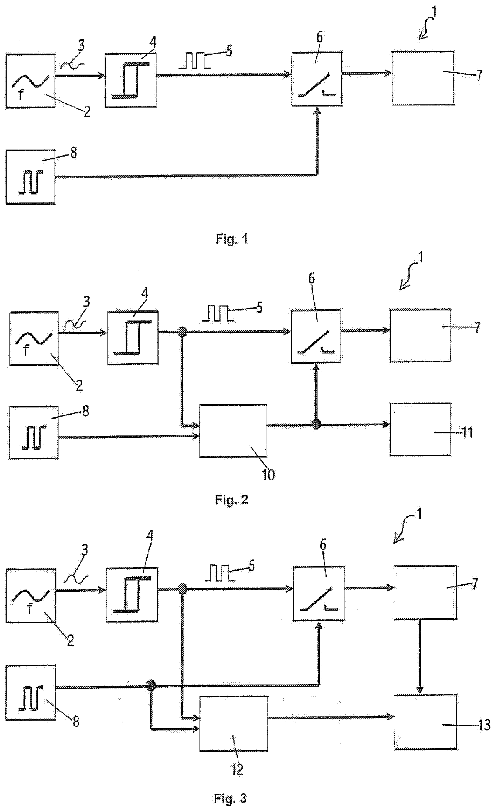

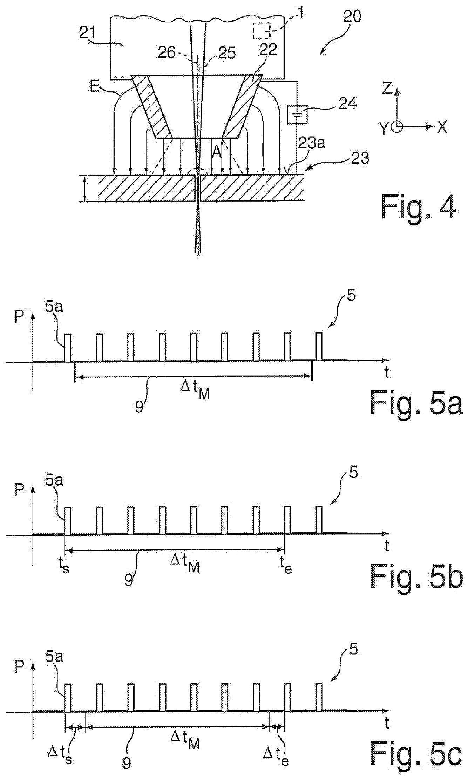

**Fig. 1** zeigt eine bekannte Abstandsmesseinrichtung 1 zur Bestimmung des Abstandes zwischen zwei (in Fig. 1 nicht gezeigten) elektrisch leitenden Körpern bzw. Bauteilen. Die Abstandsmesseinrichtung 1 ist zur kapazitiven Abstandsmessung ausgelegt und weist einen (LC-)Schwingkreis 2 auf, dessen Kapazität in Abhängigkeit vom Abstand der elektrisch leitenden Körper variiert. Der Schwingkreis 2 erzeugt ein periodisches, harmonisches Schwingungssignal 3, typischer Weise ein Sinussignal, das auch digitalisiert vorliegen kann und dessen Frequenz f ebenfalls abstandsabhängig ist und das zunächst einem Wandler 4 (Schwellwertgeber) in Form eines Schmitt-Triggers zugeführt wird, der das periodische Schwingungssignal 3 in ein Impulssignal in Form eines Rechtecksignals 5 umwandelt. Das Rechtecksignal 5 wird über einen steuerbaren Schalter 6 einem digitalen Zähler 7 zugeführt. Der steuerbare Schalter 5 steht mit einem Messtaktgeber 8 in Verbindung, welcher den Schalter 6 derart ansteuert, dass dieser mit einer vorgegebenen Abtastrate (Messtakt) geöffnet und geschlossen wird. Die Abtastrate kann z.B. so gewählt werden, dass ein in **Fig. 5a** gezeigtes Messintervall 9 eine Zeitdauer von z.B. Δt_{M} = 1 ms aufweist. Innerhalb des Messintervalls 9 registriert der Zähler 7 die Impulse 5a des Rechtecksignals 5, z.B. indem dieser ansteigenden Flanken der Amplitude P des Rechtecksignals 5 registriert.

Die Frequenz f des Schwingkreises 2 wird ermittelt, indem die mit dem Zähler 7 ermittelte Anzahl der Impulse 5a des Rechtecksignals 5 durch die Zeitdauer Δt_{M} des Messintervalls geteilt wird, welche im vorliegenden Fall durch den Messtaktgeber 8 vorgegeben ist. Wie in Fig. 5a zu erkennen ist, kann hierbei das Problem auftreten, dass das Messintervall 9 bezüglich der Impulse 5a des Rechtecksignals 5 ungünstig liegt, so dass Impulse 5a, die unmittelbar vor dem Messintervall 9 bzw. unmittelbar nach dem Messintervall 9 liegen, bei der Zählung nicht berücksichtigt werden, so dass es zu einer Abweichung bei der Bestimmung der Frequenz f kommt. Bei dem in Fig. 5a gezeigten Beispiel weicht die Zahl der Impulse im Messintervall 9 (hier: sieben) von der Zahl der Impulse bzw. Schwingungsperioden (hier: acht) ab, die eigentlich bei der Frequenzmessung ermittelt werden sollten. Es versteht sich, dass zur Vereinfachung in Fig. 5a lediglich eine kleine Anzahl von Impulsen 5a dargestellt wurde und dass die Anzahl der Impulse 5a, die in einem Messintervall 9 liegen, in der Praxis deutlich größer ist.

Eine Erhöhung der Messgenauigkeit der Frequenz f und damit des Abstands kann durch eine Abstandsmesseinrichtung 1 erreicht werden, die in **Fig. 2** dargestellt ist. Die Abstandsmesseinrichtung 1 umfasst zusätzlich zu dem in Fig. 1 beschriebenen Aufbau eine Synchronisationseinrichtung in Form einer Triggerlogik 10, die zur Synchronisation des Messintervalls 9 mit den Impulsen 5a des Rechtecksignals 5 dient. Mit anderen Worten dient die Triggerlogik 10 dazu, den Startzeitpunkt t_{S} und den Endzeitpunkt t_{E} des Messintervalls 9 so anzupassen, dass das Messintervall 9 stets eine Zeitdauer Δt_{M} aufweist, welche einem ganzzahligen Vielfachen der Periodendauer des periodischen Schwingungssignals 3 entspricht (vgl. **Fig. 5b**).

Da die Zeitdauer Δt_{M} des Messintervalls 9 von der (abstandsabhängig variierenden) Frequenz f des Schwingkreises 2 abhängt, wird die Zeitdauer Δt_{M} in einer Zeitmesseinrichtung 11 mit einer Genauigkeit von typischer Weise ca. 100 ps oder weniger, z.B. ca. 50 ps bestimmt. Die Frequenz f kann in diesem Fall präzise ermittelt werden, indem die Zahl der gemessenen Impulse 5a durch die gemessene Zeitdauer Δt_{M} des (angepassten) Messintervalls 9 geteilt wird.

Bei einem alternativen, in **Fig. 3** gezeigten Beispiel der Abstandsmesseinrichtung 1 wird ein Messintervall 9 mit fest vorgegebener Zeitdauer Δt_{M} verwendet, aber die Phasenlage zwischen dem Messintervall 9 und den Impulsen 5a des Rechtecksignals 5 bei der Bestimmung der Frequenz f berücksichtigt. Zu diesem Zweck weist die Abstandsmesseinrichtung 1 von Fig. 3 einen Phasendetektor 12 auf, welcher die Phase zwischen dem Rechtecksignal 5 und dem Messintervall 9 detektiert. Anhand der detektierten Phase kann in einer Bestimmungseinrichtung in Form einer Rechenlogik 13 der Zeitversatz zwischen dem Messintervall 9 und den Impulsen 5a des Rechtecksignals 5 bestimmt werden. Genauer gesagt werden in der Bestimmungseinrichtung 13 Teilperioden Δt_{S} bzw. Δt_{E} des periodischen Schwingungssignals 3 bzw. des Rechtecksignals 5 bestimmt (vgl. **Fig. 5c**), die z.B. in Bruchteilen der gezählten Impulse ausgedrückt werden können, so dass sich die Frequenz f gemäß folgender Formel ergibt: f = (Impulsanzahl + Start-Periodenanteil + Stopp-Periodenanteil) / Δt_{M}.

**Fig. 4** zeigt als ein Detail einer Laserbearbeitungsmaschine einen Laserbearbeitungskopf 20, in welchen die Abstandsmesseinrichtung 1 von Fig. 2 oder Fig. 3 integriert ist. Im vorliegenden Beispiel ist die Abstandsmesseinrichtung 1 in einen Grundkörper 21 des Laserbearbeitungskopfes integriert, der gegenüber einer metallischen Laserbearbeitungsdüse 22 elektrisch isoliert ist. Die Abstandsmesseinrichtung 1 dient der Messung eines Abstandes A zwischen dem unteren Ende der Laserbearbeitungsdüse 22 in Form einer Schneidgasdüse und einem metallischen, zu bearbeitenden Werkstück 23. Eine Spannungsquelle 24 dient der Erzeugung einer Potentialdifferenz zwischen der Düse 22 und dem Werkstück 23.

Um den Abstand A zwischen der Laserbearbeitungsdüse 22 und dem Werkstück 23 bzw. der Oberseite 23a des Werkstücks 23 während eines Bearbeitungsprozesses zu bestimmen, erzeugt die Spannungsquelle 24 eine vorgegebene Potentialdifferenz zwischen dem metallischen Körper der Laserbearbeitungsdüse 22 und dem ebenfalls metallischen Werkstück 23, so dass sich zwischen beiden ein elektrisches Feld E ausbildet, dessen Feldlinien in Fig. 4 dargestellt sind. Die Düse 22 und das Werkstück 23 bilden somit einen Messkondensator, der Teil des (in Fig. 4 nicht gezeigten) Schwingkreises 2 ist und mit einer (ebenfalls nicht gezeigten) Spule als weiterem Teil des Schwingkreises 2 in Reihe geschaltet ist.

Es versteht sich, dass die Darstellung der Abstandsmesseinrichtung 1 in Fig. 2 und Fig. 3 lediglich der Veranschaulichung dient und die dort gezeigten Schaltungselemente nicht als diskrete Bauteile realisiert sein müssen. Vielmehr kann die Abstandsmesseinrichtung 1 bzw. können Teile der Abstandsmesseinrichtung 1 z.B als Field Programmable Gate Array (FPGA), als Application Specific Integrated Circuit (ASIC) oder auf andere Weise realisiert werden, z.B. als eine Kombination aus Hard- und Software.

Die Abstandsmesseinrichtung 1 kann insbesondere dazu dienen, während eines Trenn-Schneidprozesses oder Laserschweißprozesses, bei dem ein Laserstrahl **25** entlang einer Laserstrahlachse **26** auf das Werkstück 23 gerichtet wird (vgl. Fig. 4), den Abstand A zu überwachen und diesen ggf. mittels einer (nicht gezeigten) Regeleinrichtung zu regeln, indem die Position des Laserbearbeitungskopfes 20 in Laserstrahlrichtung 25 (Z-Richtung eines XYZ-Koordinatensystems) verändert wird.

Durch die im Zusammenhang mit Fig. 2 und Fig. 3 beschriebenen Maßnahmen kann der Auswertefehler bei der Messung der Frequenz f des Schwingkreises 2 theoretisch vollständig eliminiert werden. Daraus resultiert ein wesentlich erhöhter Messbereich (d.h. größere Abstände A sind messbar) sowie die Möglichkeit, die Abtastrate (den Messtakt) zu erhöhen sowie Parallelkapazitäten zu kompensieren (s.u.).

Auch kann der Wandler 5 ausgelegt sein, an Stelle eines Rechtecksignals ein anderes Impulssignal mit ausreichender Flankensteilheit, z.B. ein Sägezahnsignal, zu erzeugen. Auch in diesem Fall kann die Phasenlage zwischen den Impulsflanken des Impulssignals und dem Messintervall für die Bestimmung der abstandsabhängigen Frequenz berücksichtigt oder angepasst werden.

In Abhängigkeit vom Abstand zwischen der Laserbearbeitungsdüse 22 und dem metallischen Werkstück 23 verändert sich die Lage bzw. die Länge der Feldlinien E und somit die Kapazität. Um den Zusammenhang zwischen dem Abstand A und der Kapazität bzw. Frequenz f des Schwingkreises 2 zu ermitteln, kann z.B. eine Kapazitätsmessung bei variablem, bekanntem Abstand A vorgenommen werden, um eine Kennlinie für den Abstand A in Abhängigkeit von der Kapazität und damit von der Frequenz f zu erhalten. Der Abstand A wird entweder in der Abstandsmesseinrichtung 1 selbst oder in einer anderen in der Laserbearbeitungsmaschine vorgesehenen Baueinheit anhand der Kennline und der gemessenen Frequenz f bestimmt.

Um einen eindeutigen Zusammenhang zwischen Kapazität und Abstand A bei der Kalibrierung der Abstandsmesseinrichtung 1 zu erhalten, wird zur Bestimmung der Kennlinie typischer Weise ein ebenes Werkstück 23 verwendet. Ist die Geometrie des Werkstücks 23 jedoch nicht über die gesamte Bearbeitungsdauer konstant, z.B. weil an dem Werkstück 23 Umformungen vorgenommen werden, verändert sich das Schwingungssignal 3 aufgrund der lateralen Empfindlichkeit der Kapazitätsmessung nicht nur mit dem Abstand A, sondern auch mit der Werkstückgeometrie.

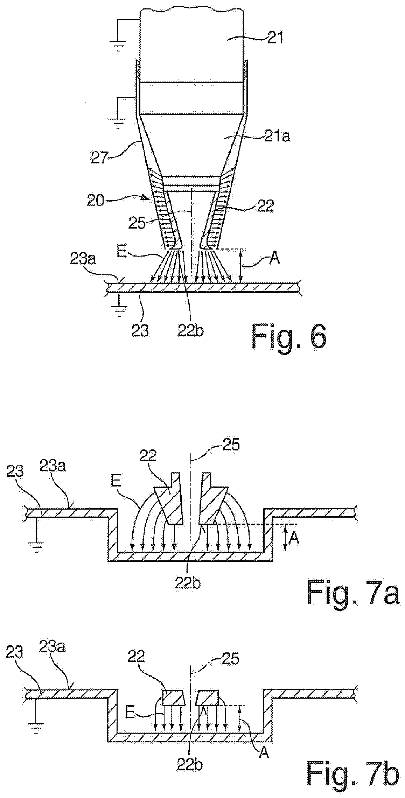

Um die laterale Empfindlichkeit der Abstandsmessung herabzusetzen, ist wie in **Fig. 6** gezeigt eine Abschirmung 27 am Grundkörper 21 des Laserbearbeitungskopfes 20 vorgesehen. Im gezeigten Beispiel ist die Abschirmung 27 als metallisches Schirmblech ausgebildet, welches mit dem Grundkörper 21 des Laserbearbeitungskopfes durch ein in Fig. 6 angedeutetes Gewinde verbunden ist, an das sich in Richtung auf das Werkstück 23 ein Teilbereich 21a des Grundkörpers 21 anschließt, welcher aus einem Isolator, z.B. aus Kunststoff oder einer Keramik besteht. Am spitz zulaufenden Ende dieses Teilbereichs 21a ist die Bearbeitungsdüse 22 über ein (nicht gezeigtes) Gewinde befestigt und wird von der Abschirmung 27 in der Art eines Mantels umhüllt.

Zwischen der Bearbeitungsdüse 22 und dem (geerdeten) Schirmblech 27 besteht eine (zeitlich) konstante Potentialdifferenz, so dass sich zwischen dem Schirmblech 27 und der Bearbeitungsdüse 22 ein zeitlich konstantes elektrisches Feld ausbildet, welches von der Geometrie des Werkstücks 23 unabhängig ist. Der durch das Werkstück 23 beeinflusste Feldanteil des elektrischen Feldes E verläuft zwischen einer Stirnseite 22b der Bearbeitungsdüse 22 und dem Werkstück 23, wobei die Feldlinien im Wesentlichen parallel zur Laserstrahlachse 25 verlaufen. Die Erstreckung der Feldlinien des elektrischen Feldes E auf dem Werkstück 23 senkrecht zur Laserstrahlachse 25 und damit der Messdurchmesser ist bei der Bearbeitungsdüse 22 von Fig. 6 deutlich geringer als beispielsweise bei der Bearbeitungsdüse 22 von Fig. 4, bei der keine Abschirmung vorgesehen ist.

Bei der in Fig. 6 gezeigten Lösung ist der Anteil der Kapazität des zeitlich konstanten, abstandsunabhängigen elektrischen Feldes E zwischen der Bearbeitungsdüse 22 und dem Schirmblech 27 an der Gesamt-Kapazität jedoch verhältnismäßig groß, wodurch eine Verringerung des Messbereichs in Laserstrahlrichtung 25 entsteht, welche durch die hohe Genauigkeit der oben beschriebenen Abstandsmesseinrichtung 1 bzw. durch eine präzisere Frequenzmessung kompensiert werden kann.

Es versteht sich, dass die Feldlinien in Fig. 6 nur schematisch dargestellt sind und deren tatsächlicher Verlauf vom dort gezeigten Verlauf abweicht. Auch kann die Länge der Abschirmung 27 in Laserstrahlrichtung 25 geringer ausfallen als in Fig. 6 dargestellt und deren Geometrie kann (wie auch die Geometrie der Bearbeitungsdüse 22) von dem in Fig. 6 gezeigten Beispiel abweichen. Erfindungsgemäß erstreckt sich die Abschirmung 27 zumindest bis zur Stirnseite 22b der Bearbeitungsdüse 22, d.h. die Abschirmung 27 schließt bündig mit der Spitze der Bearbeitungsdüse 22 ab.

Es kann zur Verringerung des Einflusses der Geometrie des Werkstücks 23 auf die Messung eine plattenförmige Bearbeitungsdüse 22 verwendet werden, wie sie in **Fig. 7b** (zur Vereinfachung ohne Laserbearbeitungskopf) dargestellt ist. **Fig. 7a** zeigt demgegenüber eine Bearbeitungsdüse, wie sie im Stand der Technik verwendet wird. Die plattenförmige Bearbeitungsdüse 22 in Fig. 7b weist eine sehr viel geringere seitliche Fläche auf als die herkömmliche Bearbeitungsdüse 22 von Fig. 7a, wodurch eine seitliche Ausbreitung des elektrischen Feldes E nahezu vollständig verhindert wird und das elektrische Feld E im Wesentlichen parallel zur Laserstrahlrichtung 25 zwischen dem Werkstück 23 und der Stirnseite 22b der Bearbeitungsdüse 22 verläuft. Dies führt jedoch zu einer deutlichen Verringerung der Gesamt-Kapazität zwischen der Bearbeitungsdüse 22 und dem Werkstück 23 und somit zu einer Verringerung des Messbereichs bei der Abstandsmessung A in Laserstrahlrichtung 25, welche durch die höhere Genauigkeit bei der Bestimmung des Abstands A mittels der oben beschriebenen Abstandsmesseinrichtung 1 kompensiert werden kann.

Zusätzlich oder alternativ kann der zur Abstandsmessung dienende Oberflächenbereich an der Stirnseite 22a der Bearbeitungsdüse 22 klein gehalten werden, was jedoch ebenfalls zu einer deutlichen Verringerung der Gesamt-Kapazität zwischen der Bearbeitungsdüse 22 und dem Werkstück 23 und somit zu einer Verringerung des Messbereichs bei der Abstandsmessung A in Laserstrahlrichtung 25 führt, welche durch die höhere Genauigkeit bei der Bestimmung des Abstands A mittels der oben beschriebenen Abstandsmesseinrichtung 1 kompensiert werden kann.

Durch die in Zusammenhang mit Fig. 6 und Fig. 7a,b beschriebenen Maßnahmen ist der Messdurchmesser in lateraler Richtung und damit der Einfluss der Geometrie des Werkstücks 23, insbesondere einzelner Kanten an dem Werkstück 23 (vgl. Fig. 7), auf die Abstandsmessung verhältnismäßig gering. Auch verlaufen die elektrischen Feldlinien im Wesentlichen in Messrichtung (d.h. in Laserstrahlrichtung 25), so dass die Präzision bei der Messung des Abstandes A insbesondere bei Werkstücken 23, die keine plane Werkstückoberfläche 23a aufweisen, signifikant erhöht werden kann.

## Patentansprüche

1. Laserbearbeitungsmaschine, umfassend:
eine Bearbeitungsdüse (22), sowie
eine Abstandsmesseinrichtung (1) zur kapazitiven und/oder induktiven Messung eines Abstands (A) zwischen einer Bearbeitungsdüse (22) und einem Werkstück (23), die Abstandsmesseinrichtung (1) umfassend:
einen Schwingkreis (2) mit abstandsabhängiger Kapazität und/oder Induktivität zur Erzeugung eines periodischen Schwingungssignals (3) mit abstandsabhängiger Frequenz (f),
einen Wandler (4) zur Umsetzung des periodischen Schwingungssignals (3) mit abstandsabhängiger Frequenz (f) in ein Impulssignal (5), sowie einen Zähler (7) zur Zählung von Impulsen (5a) des Impulssignals (5) innerhalb eines Messintervalls (9) zur Bestimmung der abstandsabhängigen Frequenz (f) des periodischen Schwingungssignals (3),
**dadurch gekennzeichnet,**
**dass** zur Bestimmung der abstandsabhängigen Frequenz (f) die Abstandsmesseinrichtung (1) Mittel (10, 11) zur Anpassung der Phasenlage oder Mittel (12, 13) zur Berücksichtigung der Phasenlage zwischen dem Messintervall (9) und den Impulsen (5a) des Impulssignals (5) aufweist, und
**dass** die Bearbeitungsdüse (22) zumindest in einem Teilbereich ihrer Mantelfläche, der sich bis zur Stirnseite (22b) der Bearbeitungsdüse (22) erstreckt, von einer elektrisch leitenden Abschirmung (27) umgeben ist.

2. Laserbearbeitungsmaschine nach Anspruch 1, bei welcher die Mittel zur Anpassung der Phasenlage eine Synchronisationseinrichtung, insbesondere eine Triggerlogik (10), zur Synchronisation des Messintervalls (9) mit den Impulsen (5a) des Impulssignals (5) umfassen.

3. Laserbearbeitungsmaschine nach Anspruch 2, weiter umfassend: eine Zeitmesseinrichtung (11) zur Messung des Zeitdauer (Δt_{M}) des Messintervalls (9).

4. Laserbearbeitungsmaschine nach Anspruch 3, bei welcher die Zeitmesseinrichtung (11) eine Genauigkeit von mehr als 100 ps, bevorzugt von mehr als 50 ps aufweist.

5. Laserbearbeitungsmaschine nach Anspruch 1, bei der die Mittel zur Berücksichtigung der Phasenlage einen Phasendetektor (12) zur Ermittlung der Phasenlage zwischen dem Messintervall (9) und dem Impulssignal (5) umfassen.

6. Laserbearbeitungsmaschine nach Anspruch 5, bei der die Mittel zur Berücksichtigung der Phasenlage eine Bestimmungseinrichtung, insbesondere eine Rechenlogik (13), zur Bestimmung eines Zeitversatzes (Δt_{S}, Δt_{E}) zwischen dem Messintervall (9) und den Impulsen (5a) des Impulssignals (5) aufweist.

7. Laserbearbeitungsmaschine nach einem der vorhergehenden Ansprüche, bei welcher der Wandler (4) als Schmitt-Trigger ausgebildet ist.

8. Laserbearbeitungsmaschine nach einem der vorhergehenden Ansprüche, weiter umfassend: einen ansteuerbaren Schalter (6) zum Aktivieren des Zählers (7) während des Messintervalls (9), sowie einen Messtaktgeber (8) zum Ansteuern des Schalters (6).

9. Laserbearbeitungsmaschine nach einem der vorhergehenden Ansprüche, bei der die Abschirmung durch ein metallisches Schirmelement (27) gebildet ist.

10. Laserbearbeitungsmaschine nach einem der vorhergehenden Ansprüche, bei welcher die Laserbearbeitungsdüse (22) plattenförmig ausgebildet ist.

## Claims

1. Laser processing machine, comprising:
a processing nozzle (22), and
a distance measuring device (1) for capacitive and/or inductive measurement of a distance (A) between a processing nozzle (22) and a workpiece (23), the distance measuring device (1) comprising:
an oscillator circuit (2) with distance-dependent capacitance and/or inductance for generating a periodic oscillatory signal (3) with a distance-dependent frequency (f),
a converter (4) for converting the periodic oscillatory signal (3) with distance-dependent frequency (f) into a pulse signal (5), and
a counter (7) for counting pulses (5a) of the pulse signal (5) within a measuring interval (9) to determine the distance-dependent frequency (f) of the periodic oscillatory signal (3),
**characterized in that**
to determine the distance-dependent frequency (f), the distance measuring device (1) has means (10, 11) for adapting the phase angle or means (12, 13) for taking into account the phase angle between the measuring interval (9) and the pulses (5a) of the pulse signal (5), and
**in that** the processing nozzle (22) is surrounded by an electrically conductive shield (27), at least in a sub-area of its circumferential surface which extends as far as the front end (22b) of the processing nozzle (22).

2. Laser processing machine according to Claim 1, in which the means for adapting the phase angle comprise a synchronization device, in particular a trigger logic (10), for synchronizing the measuring interval (9) with the pulses (5a) of the pulse signal (5).

3. Laser processing machine according to Claim 2, further comprising: a time measuring device (11) for measuring the time period (Δt_{M}) of the measuring interval (9).

4. Laser processing machine according to Claim 3, in which the time measuring device (11) has an accuracy of more than 100 ps, preferably of more than 50 ps.

5. Laser processing machine according to Claim 1, in which the means for taking into account the phase angle comprise a phase detector (12) for determining the phase angle between the measuring interval (9) and the pulse signal (5).

6. Laser processing machine according to Claim 5, in which the means for taking into account the phase angle have a determining device, in particular computing logic (13), for determining a time offset (Δt_{S}, Δt_{E}) between the measuring interval (9) and the pulses (5a) of the pulse signal (5).

7. Laser processing machine according to one of the preceding claims, in which the converter (4) is designed as a Schmitt trigger.

8. Laser processing machine according to one of the preceding claims, further comprising: a controllable switch (6) for activating the counter (7) during the measuring interval (9), and also a measuring clock rate generator (8) for driving the switch (6).

9. Laser processing machine according to one of the preceding claims, in which the shield is formed by a metallic shielding element (27).

10. Laser processing machine according to one of the preceding claims, in which the laser processing nozzle (22) is of plate-like design.

## Revendications

1. Machine d'usinage au laser, comprenant :
une buse d'usinage (22), et
un dispositif de mesure de distance (1) pour la mesure capacitive et/ou inductive d'une distance (A) entre une buse d'usinage (22) et une pièce (23), le dispositif de mesure de distance (1) comprenant :
un circuit oscillant (2) ayant une capacité et/ou une inductance dépendante de la distance pour produire un signal oscillant périodique (3) à une fréquence (f) dépendante de la distance,
un convertisseur (4) pour convertir le signal oscillant périodique (3) à une fréquence (f) dépendante de la distance en un signal impulsionnel (5) et
un compteur (7) pour compter les impulsions (5a) du signal impulsionnel (5) dans un intervalle de mesure (9) pour déterminer la fréquence (f) dépendante de la distance du signal oscillant périodique (3),
**caractérisé en ce**
**que**, pour déterminer la fréquence (f) dépendante de la distance, le dispositif de mesure de distance (1) présente des moyens (10, 11) pour adapter la position de phase ou des moyens (12, 13) pour tenir compte de la position de phase entre l'intervalle de mesure (9) et les impulsions (5a) du signal impulsionnel (5), et
**que** la buse d'usinage (22) est entourée d'un blindage électroconducteur (27) au moins dans une zone partielle de sa surface extérieure qui s'étend jusqu'à la face frontale (22b) de la buse d'usinage (22).

2. Machine d'usinage au laser selon la revendication 1, dans laquelle les moyens pour adapter la position de phase comprennent un dispositif de synchronisation, en particulier une logique de déclenchement (10), pour synchroniser l'intervalle de mesure (9) avec les impulsions (5a) du signal impulsionnel (5).

3. Machine d'usinage au laser selon la revendication 2, comprenant en outre : un dispositif de mesure du temps (11) pour mesurer la durée (Δt_{M}) de l'intervalle de mesure (9).

4. Machine d'usinage au laser selon la revendication 3, dans laquelle le dispositif de mesure du temps (11) présente une précision supérieure à 100 ps, de préférence supérieure à 50 ps.

5. Machine d'usinage au laser selon la revendication 1, dans laquelle les moyens pour tenir compte de la position de phase comprennent un détecteur de phase (12) pour déterminer la position de phase entre l'intervalle de mesure (9) et le signal impulsionnel (5).

6. Machine d'usinage au laser selon la revendication 5, dans laquelle les moyens pour tenir compte de la position de phase présentent un dispositif de détermination, en particulier une logique de calcul (13), pour déterminer un décalage temporel (Δt_{S}, Δt_{E}) entre l'intervalle de mesure (9) et les impulsions (5a) du signal impulsionnel (5).

7. Machine d'usinage au laser selon l'une des revendications précédentes, dans laquelle le convertisseur (4) est réalisé sous la forme d'un trigger de Schmitt.

8. Machine d'usinage au laser selon l'une des revendications précédentes, comprenant en outre : un commutateur commandable (6) pour activer le compteur (7) pendant l'intervalle de mesure (9) ainsi qu'un générateur de cycles de mesure (8) pour commander le commutateur (6).

9. Machine d'usinage au laser selon l'une des revendications précédentes, dans laquelle le blindage est formé par un élément de blindage métallique (27).

10. Machine d'usinage au laser selon l'une des revendications précédentes, dans laquelle la buse d'usinage au laser (22) est réalisée en forme de plaque.
